# EUROPEAN PATENT APPLICATION

(11) **EP 3 786 494 A1**
(43) Date of publication of application: **03.03.2021**
(21) Application number: 19821650.9
(22) Date of filing: 06.06.2019
(51) Int. Cl.: F16J 15/18, F16K 11/07

(54) **SEAL STRUCTURE FOR FLUID PRESSURE DEVICE**

(30) Priority: 20.06.2018 JP 2018117248
(71) Applicant: SMC Corporation, Tokyo 101-0021 (JP)
(72) Inventor: KUDO, Masayuki, Tsukubamirai-shi, Ibaraki 3002493 (JP); TAKEDA, Kenichi, Tsukubamirai-shi, Ibaraki 3002493 (JP); KAWAKAMI, Masahiko, Tsukubamirai-shi, Ibaraki 3002493 (JP); TAMURA, Ken, Tsukubamirai-shi, Ibaraki 3002493 (JP); ODAKA, Tsukasa, Tsukubamirai-shi, Ibaraki 3002493 (JP)
(74) Representative: Keil & Schaafhausen Patentanwälte PartGmbB
(86) International application number: PCT/JP2019/022444
(87) International publication number: WO 2019/244642

(57) **Abstract**

[Object] To obtain a seal structure for a fluid pressure device, the seal structure having low sliding resistance in operation and being unlikely to produce biting, fixation, or the like resulting from protrusion from a mounting groove.

[Solution] A seal structure 2 includes a mounting groove 16 disposed in a first member 5 and a packing unit 8 housed in the mounting groove 16. The packing unit 8 includes an inner circumferential mounting section 20 and an outer circumferential sliding section 21. Both side surfaces 22a and 22b of the packing unit 8 are conical surfaces which are inclined such that their dimeters gradually increase in a direction from the mounting section 20 toward the sliding section 21 and which are inclined in mutually opposite directions. The thickness of the packing unit 8 increases in a gradual manner in the direction from the mounting section 20 toward the sliding section 21, the thickness T1 in the mounting section 20 is the smallest, and the thickness T2 in the sliding section 21 is the largest.

## Description

### Technical Field

The present invention relates to a seal structure for sealing between a first member and a second member sliding relative to each other in a fluid pressure device.

### Background Art

For example, in a fluid pressure device, such as a fluid pressure cylinder or an electromagnetic valve, a sliding member, such as a piston or a spool, has a mounting groove in its outer circumference, a packing unit is mounted in the mounting groove, and the sliding member slides inside a sliding cavity in a housing with the packing unit disposed therebetween. That packing unit needs to have low sliding resistance and additionally be unlikely to produce biting, fixation, or the like resulting from protrusion from the mounting groove.

Examples typically used as the packing unit of that type may include an O ring and a D ring. The O ring, however, has the drawbacks of not only having high sliding resistance and but also being likely to produce biting, fixation, or the like resulting from twisting. The D ring is unlikely to produce twisting, biting, fixation, or the like, in comparison with the O ring, but has the drawback of having high sliding resistance because reaction force to compression when fluid pressure acts (during pressurization) is large.

Therefore, as described in Patent Literatures 1 to 7, there are an increasing number of examples using devised modified packing units, including one having a constricted section in part and one in which the thickness varies in the inner and outer circumferential directions. Because those modified packing units are flexible and are appropriately compressed and deformed during pressurization or during sliding, they possess the advantages of having lower sliding resistance than the D ring and of being less likely to produce biting, fixation, or the like than the O ring.

Many of the publicly known modified packing units, however, have problems of, for example, being deformed locally and in addition excessively in a thin portion, such as a constricted section, or on the contrary, being unable to obtain a sufficient advantage of reducing the sliding resistance because inadequate flexibility, and they still have room for further improvements.

In particular, in recent years, fluid pressure devices have been refined, and thus packing units used therein have been required to achieve a higher degree of sealing. Therefore, there is a need for a new packing unit that has lower sliding resistance even slightly and is less likely to produce biting, fixation, or the like than known packing units.

One example approach may be increasing the width of the D ring in the radius direction. In that case, because the flexibility is increased, the sliding resistance is expected to be reduced by deformation during sliding. In contrast, however, because the amount of protrusion from the mounting groove resulting from compression during pressurization is increased, biting, fixation, or the like is likely to occur. Therefore, simply increasing the width of the packing unit in the radius direction to reduce the sliding resistance is unsatisfactory.

### Citation List

### Patent Literature

PTL 1: Japanese Unexamined Utility Model Registration Application Publication No. 55-102457
PTL 2: Japanese Unexamined Patent Application Publication No. 61-228166
PTL 3: Japanese Unexamined Utility Model Registration Application Publication No. 62-91063
PTL 4: Japanese Unexamined Utility Model Registration Application Publication No. 62-126663
PTL 5: Japanese Unexamined Utility Model Registration Application Publication No. 4-36174
PTL 6: Japanese Unexamined Patent Application Publication No. 7-269733
PTL 7: Japanese Registered Utility Model No. 2537236

### Summary of Invention

### Technical Problem

A technical object of the present invention is to provide a seal structure for a fluid pressure device, the seal structure having low sliding resistance in operation and being unlikely to produce biting, fixation, or the like resulting from protrusion from a mounting groove.

### Solution to Problem

To achieve the object, the present invention provides a seal structure for sealing between a first member and a second member relatively displaced in a fluid pressure device.

The seal structure includes a ring-shaped mounting groove disposed in the first member and a ring-shaped packing unit housed in the mounting groove. An inner circumferential portion of the packing unit is a mounting section in contact with a bottom wall of the mounting groove, and an outer circumferential portion of the packing unit is a sliding section in contact with the second member. An end surface of the sliding section and an end surface of the mounting section are arc-shaped surfaces curved outward. A first side surface and a second side surface of the packing unit on a first side and a second side, respectively, in a direction of an axis thereof are conical surfaces which are inclined such that their diameters gradually increase in a direction from the mounting section toward the sliding section and which are inclined in mutually opposite direction. A thickness of the packing unit in the axis direction increases in a gradual manner in the direction from the mounting section to the sliding section, the thickness in the mounting section is the smallest, and the thickness in the sliding section is the largest.

In the present invention, an angle of the first side surface to a plane perpendicular to the axis and an angle of the second side surface thereto are equal.

The thickness in the sliding section of the packing unit is 1.2 to 1.5 times the thickness in the mounting section, and a width of the packing unit in its radius direction is three to five times the thickness in the sliding section.

In the present invention, preferably, the first side surface and the second side surface of the packing unit may have a plurality of annular grooves for keeping a lubricant, the annular grooves may be concentric about the axis, the plurality of annular grooves in the first side surface and the plurality of annular grooves in the second side surface may be equal in number and may be in mutually opposed positions.

In that case, a cross-sectional shape of each of the annular grooves may preferably be an arc and be a minor arc, the arcs of all of the annular grooves may preferably have the same radius of curvature, and all of the annular grooves may preferably have the same depth.

More preferably, the plurality of annular grooves in each of the first side surface and the second side surface of the packing unit may include three annular grooves evenly spaced, and a distance between centers of curvature of the neighboring annular grooves, a distance from the end surface of the mounting section to the center of curvature of the annular groove nearest the mounting section, and a distance from the end surface of the sliding section to the center of curvature of the annular groove nearest the sliding section may be equal.

In the present invention, the first side surface and the second side surface of the packing unit may preferably have a plurality of recessed grooves extending along the radius direction of the packing unit, arranged at equiangular intervals around the axis, starting at the end surface of the sliding section, and ending at a location of the annular groove nearest the mounting section, and the plurality of recessed grooves in the first side surface and the plurality of recessed grooves in the second side surface may preferably be in locations displaced from each other by 1/2 pitch in a circumferential direction thereof.

More preferably, the recessed grooves and the annular grooves may have the same depth.

According to one embodiment of the present invention, the fluid pressure device is a fluid pressure cylinder, the first member is a piston housed in a cylinder cavity such that the piston is freely slidable, and the second member is a cylinder housing having the cylinder cavity.

According to another embodiment of the present invention, the fluid pressure device is a spool valve, the first member is a spool housed in a valve cavity such that the spool is freely slidable, and the second member is a valve housing having the valve cavity.

### Advantageous Effects of Invention

In the seal structure of the present invention, because both side surfaces of the packing unit are conical surfaces inclined in mutually opposite directions and thus the thickness of the packing unit increases in a gradual manner in the direction from the mounting section toward the sliding section, the flexibility of the packing unit is increased and the packing unit can be easily bent in a smooth and uniform manner as a whole while at the same time protrusion from the mounting groove resulting from deformation of the sliding section during pressurization by fluid pressure is unlikely to occur. Therefore, the sliding resistance during operation can be efficiently reduced while at the same time biting is unlikely to occur and the fluid pressure can be lowered by the amount of the reduction in the sliding resistance, and thus an energy-saving effect is obtainable. In addition, because a component force of the fluid pressure acts on the side surfaces of the packing unit during pressurization by the fluid pressure toward the sliding section in the packing unit, an increase in the contact pressure on the mounting section side occurring with compression of the packing unit, that is, an increase in the amount of distortion can be suppressed, and the reaction force caused by the distortion on the mounting section side can be prevented from being transmitted to the sliding section side.

### Brief Description of Drawings

[Fig. 1] Fig. 1 is a cross-sectional view of an air cylinder including a seal structure in the present invention and illustrates a state where a piston is in a reverse end.
[Fig. 2] Fig. 2 illustrates a state where the piston is in the course of a forward stroke in the air cylinder in Fig. 1.
[Fig. 3] Fig. 3 is a plan view of a packing unit included in the seal structure according to the present invention.
[Fig. 4] Fig. 4 is an enlarged cross-sectional view of the packing unit in Fig. 3 taken along the line IV-IV.
[Fig. 5] Fig. 5 in an enlarged fragmentary cross-sectional view illustrating a non-pressurization state where the piston is in the position illustrated in Fig. 1 and air pressure does not act on the packing unit.
[Fig. 6] Fig. 6 is an enlarged fragmentary cross-sectional view illustrating a state where the packing unit in the state illustrated in Fig. 5 is pressurized by a supply of compressed air.
[Fig. 7] Fig. 7 is an enlarged fragmentary cross-sectional view illustrating an operating state of the packing unit when the piston is the forward stroke illustrated in Fig. 2.
[Fig. 8] Fig. 8 is a fragmentary cross-sectional view of a spool valve including the seal structure in the present invention.

### Description of Embodiments

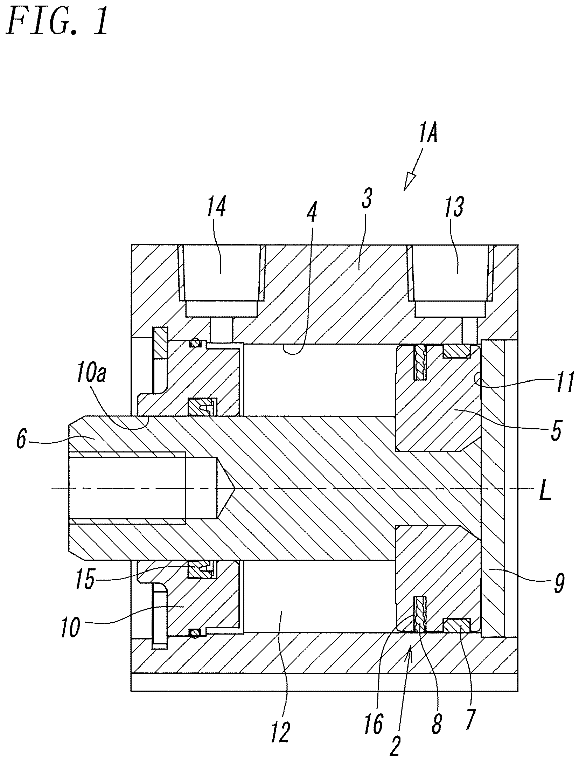

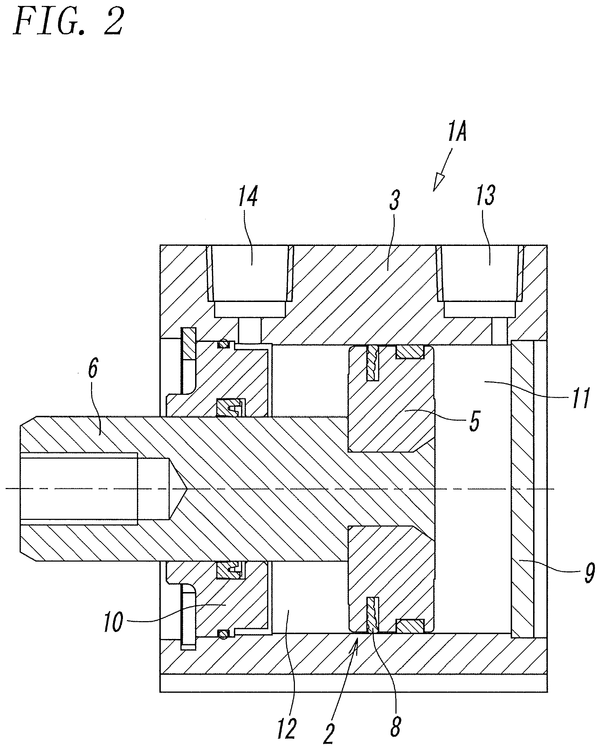

Figs. 1 and 2 illustrate a fluid pressure device including a seal structure according to the present invention. That fluid pressure device is an air cylinder.

The air cylinder 1A includes a cylinder housing 3 whose external form has a rectangular parallelepiped shape. The cylinder housing 3 has a circular cylinder cavity 4, the cylindrical cavity 4 houses a piston 5 such that the piston 5 can freely slide along an axis L of the cylinder cavity 4, and the piston 5 is connected to a rod 6.

A guide ring 7 for guiding the piston 5 is mounted on the outer circumference of the piston 5, and a packing unit 8 for sealing between the outer circumference of the piston 5 and the inner circumference of the cylinder cavity 4 is mounted thereon.

A first end and a second end of the cylinder cavity 4 are hermetically blocked by a head-side end plate 9 and a rod-side end plate 10, respectively. A head-side pressure space 11 is disposed between the head-side end plate 9 and the piston 5. A rod-side pressure space 12 is disposed between the rod-side end plate 10 and the piston 5. The head-side pressure space 11 communicates with a head-side port 13 disposed in a position near the head-side end plate 9 in a side surface of the cylinder housing 3. The rod-side pressure space 12 communicates with a rod-side port 14 disposed in a position near the rod-side end plate 10 in the side surface of the cylinder housing 3.

The rod 6 hermetically extends through a center hole 10a in the rod-side end plate 10 with a lip-type seal member 15 mounted on the inner circumference of the rod-side end plate 10 disposed therebetween. The tip of the rod 6 projects outside the cylinder housing 3.

In the air cylinder 1A, when in a state where the piston 5 and the rod 6 are positioned at a reverse end illustrated in Fig. 1, the rod-side pressure space 12 is opened to the atmosphere through the rod-side port 14 and compressed air is supplied to the head-side pressure space 11 through the head-side port 13, the piston 5 and the rod 6 move forward, as illustrated in Fig. 2, and the piston 5 stops at a forward end position, where it is in contact with the rod-side end plate 10.

When in a state where the piston 5 and the rod 6 are at the forward end, the head-side pressure space 11 is opened to the atmosphere through the head-side port 13 and compressed air is supplied to the rod-side pressure space 12 through the rod-side port 14, the piston 5 and the rod 6 reverse, as illustrated in Fig. 1, and the piston 5 stops at the reverse end position, where it is in contact with the head-side end plate 9.

Next, a seal structure 2 according to the present invention is described. The seal structure 2 is used for sealing between a first member and a second member relatively displaced in a fluid pressure device. In the case of the air cylinder 1A, the piston 5 is the first member, and the cylinder housing 3 is the second member. The seal structure 2 includes a ring-shaped mounting groove 16 disposed in the piston 5 and the packing unit 8 housed in the mounting groove 16.

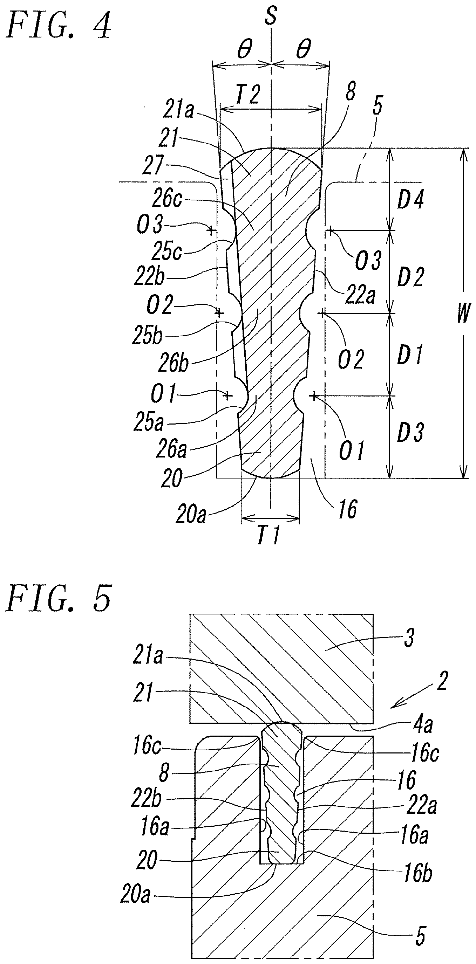

As is clear from Fig. 5, the mounting groove 16 has left and right side walls 16a and a bottom wall 16b. The left and right side walls 16a are flat surfaces linearly extending from the groove opening of the mounting groove 16 to the bottom wall 16b and are parallel to each other. The bottom wall 16b is a cylindrical surface whose generatrix is parallel to the axis L. The groove width of the mounting groove 16 is constant across the depth from the opening to the bottom wall 16b. The depth of the mounting groove 16 is larger than the groove width and slightly smaller than the width W of the packing unit 8 in its radius direction. The opening edge of the mounting groove 16, that is, end portions 16c of the left and right side walls 16a may preferably be arc-shaped rounded.

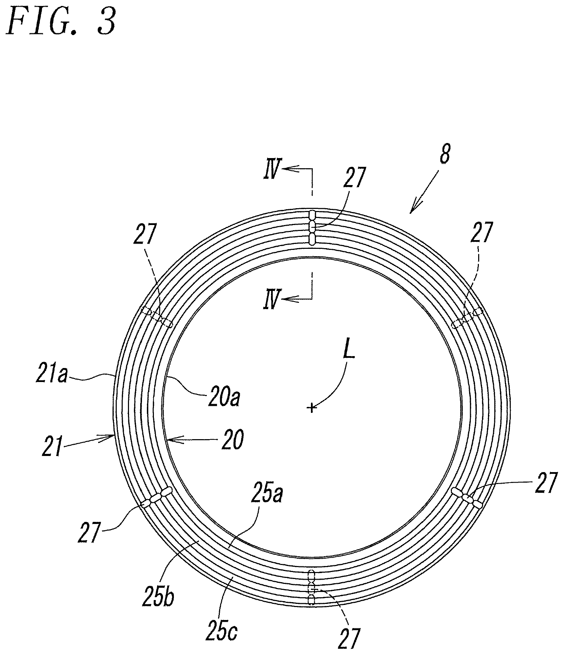

As illustrated in Figs. 3 and 4, the packing unit 8 is made of synthetic rubber in the shape of a ring, and includes an inner circumferential portion and an outer circumferential portion. As illustrated in Fig. 5, the inner circumferential portion is a mounting section 20 in contact with the bottom wall 16b of the mounting groove 16, and the outer circumferential portion is a sliding section 21 in contact with a cavity wall 4a of the cylinder cavity 4 (sliding cavity), that is, the cylinder housing 3. Each of an end surface 20a of the mounting section 20 and an end surface 21a of the sliding section 21 is an arc-shaped surface curved outward.

A first side surface 22a and a second side surface 22b of the packing unit 8 on a first side and a second side, respectively, of in the direction of the axis L are conical surfaces which are inclined such that their diameters gradually increase in the direction from the mounting section 20 toward the sliding section 21 and which are inclined in a gradual manner in mutually opposite directions. The angles of inclination of the conical surfaces, that is, the angles θ of the inclination of the first side surface 22a and the second side surface 22b to a plane S perpendicular to the axis L are equal. The angles θ may preferably be two to four degrees and more preferably be three degrees.

Because both of the side surfaces 22a and 22b of the packing unit 8 are conical surfaces, as described above, the thickness of the packing unit 8 in the direction of the axis L is not uniform in the radius direction of the packing unit 8 and increases in a gradual manner by a certain rate in the direction from the mounting section 20 toward the sliding section 21. The thickness T1 in the mounting section 20 is the smallest, and the thickness T2 in the sliding section 21 is the largest.

The thickness T2 in the sliding section 21 may preferably be 1.2 to 1.5 times the thickness T1 in the mounting section 20. In the illustrated example, the ratio between the thickness T2 in the sliding section 21 and the thickness T1 in the mounting section 20 is 1 : 0.75, and the thickness T2 in the sliding section 21 is about 1.33 times the thickness T1 in the mounting section 20.

The radius of curvature of the arc of the end surface 20a of the mounting section 20 is smaller than the thickness T1 in the mounting section 20 and is equal to or larger than 1/2 of the thickness T1. The radius of curvature of the arc of the end surface of the sliding section 21 is smaller than the thickness T2 in the sliding section 21 and is equal to or larger than 1/2 of the thickness T2.

The width of the packing unit 8 in the radius direction, that is, the width W from the end surface 20a of the mounting section 20 to the end surface 21a of the sliding section 21 is larger than the thickness T2 in the sliding section 21, and its preferable size may be in the range of three to five times the thickness T2. In the illustrated example, the width W is about four times the thickness T2.

The first side surface 22a and the second side surface 22b of the packing unit 8 have a plurality of ring-shaped annular grooves 25a, 25b, and 25c concentric about the axis L to make them keep a lubricant, such as grease. The plurality of annular grooves 25a, 25b, and 25c in the first side surface 22a and the plurality of annular grooves 25a, 25b, and 25c in the second side surface 22b are equal in number and are in mutually opposed positions. In the illustrated example, each of the first side surface 22a and the second side surface 22b has the three annular grooves 25a, 25b, and 25c spaced evenly in the radius direction. Hence, the packing unit 8 in portions where the annular grooves 25a, 25b, and 25c are present is thinner than that in the other portions where the annular grooves 25a, 25b, and 25c are absent, and it can be considered that constricted sections 26a, 26b, and 26c are present in the portions where the annular grooves 25a, 25b, and 25c are present.

The shape of a cross section of each of the annular grooves 25a, 25b, and 25c is an arc and is a minor arc. All the annular grooves 25a, 25b, and 25c have the same radius of curvature, and additionally, the annular grooves 25a, 25b, and 25c have the same depth. Accordingly, the three constricted sections 26a, 26b, and 26c have different thicknesses. The constricted section 26a, which is the nearest the mounting section 20, has the smallest thickness. The constricted section 26c, which is the nearest the sliding section 21, has the largest thickness.

Because the three annular grooves 25a, 25b, and 25c in each of the first side surface 22a and the second side surface 22b of the packing unit 8 are arranged at equal intervals, the distance (distance between the centers of curvature) D1 from the center O1 of curvature of the first annular groove 25a, which is the nearest the mounting section 20, to the center O2 of curvature of the second annular groove 25b, which is in an intermediate position, and the distance (distance between the centers of curvature) D2 from the center O2 of curvature of the second annular groove 25b to the center O3 of curvature of the third annular groove 25c, which is the nearest the sliding section 21, are equal. In the present embodiment, moreover, the distance D3 from the end surface 20a of the mounting section 20 to the center O1 of curvature of the first annular groove 25a and the distance D4 from the end surface 21a of the sliding section 21 to the center O3 of curvature of the third annular groove 25c are also substantially the same as the distances D1 and D2 between the centers of curvature.

The first side surface 22a and the second side surface 22b of the packing unit 8 have a plurality of recessed grooves 27 extending along the radius direction of the packing unit 8, arranged at equiangular intervals around the axis L, starting at the end surface 21a of the sliding section 21, and ending at the location of the first annular groove 25a, which is the nearest the mounting section 20. The plurality of recessed grooves 27 in the first side surface 22a and the plurality of recessed grooves 27 in the second side surface 22b are in locations displaced from each other by 1/2 pitch in the circumferential direction. The recessed grooves 27 are used for preventing the side surfaces 22a and 22b of the packing unit 8 from being in close contact with the side walls 16a of the mounting groove 16 by functioning as vent gaps. The depth of the recessed grooves 27 is the same as the depth of the annular grooves 25a, 25b, and 25c.

In the illustrated embodiment, each of the side surfaces 22a and 22b has the three recessed grooves 27 spaced at intervals of 120 degrees, and the recessed grooves 27 in the first side surface 22a and the recessed grooves 27 in the second side surface 22b are displaced from each other by 60 degrees.

The operations of the seal structure 2 are described below. Fig. 5 illustrates a state where the piston 5 is in the operational position illustrated in Fig. 1 and compressed air is not supplied to the head-side pressure space 11 or the rod-side pressure space 12. At that time, the packing unit 8 is in a non-pressurization state where air pressure does not act on the first side surface 22a or the second side surface 22b.

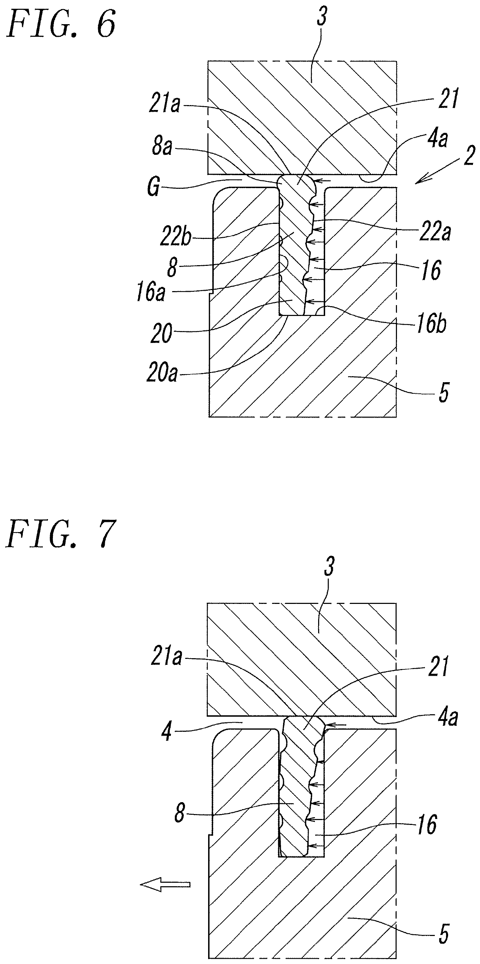

When in that state illustrated in Fig. 1, compressed air is supplied to the head-side pressure space 11, the packing unit 8 is pressurized by air pressure acting on the right side surface of the packing unit 8, that is, the first side surface 22a, as illustrated in Fig. 6, and thus the left side surface of the packing unit 8, that is, the second side surface 22b is pressed against the left side wall 16a of the mounting groove 16 by the air pressure, and at the same time, the packing unit 8 is compressed in the thickness direction and is slightly extended in the width direction W (radius direction). Therefore, the contact pressure of the end surface 21a of the sliding section 21 to the cavity wall 4a of the cylinder cavity 4 increases, whereas an increase in the contact pressure of the end surface 20a of the mounting section 20 to the bottom wall 16b of the mounting groove 16 is suppressed because the side surfaces 22a and 22b of the packing unit 8 are conical surfaces, a component force of the air pressure acts on the first side surface 22a toward the outer circumferential side of the packing unit 8, and that component force presses the packing unit 8 in the direction toward the outer circumferential side (toward the sliding section 21). Hence, an increase in the amount of distortion occurring with the increase in the contact pressure can also be suppressed, and transmission of a reaction force caused by the distortion of the end surface 20a to the outer circumferential side can be prevented.

The sliding section 21 in the packing unit 8 is deformed in part, that deformed portion 8a enters a gap G between the outer circumferential surface of the piston 5 and the inner circumferential surface of the cylinder cavity 4 (cavity wall 4a).

The thickness of the packing unit 8, however, increases gradually in the direction from the mounting section 20 toward the sliding section 21, the thickness T2 in the sliding section 21 is the largest, and thus the sliding section 21 has a shape that is unlikely to bite into the gap G. Therefore, the amount and rate of an entry of a deformed portion of the sliding section 21 into the gap G are small, and malfunctions caused by the biting are unlikely to occur.

Then, when the piston 5 starts moving forward, as illustrated in Fig. 7, the portion including the sliding section 21 in the packing unit 8 is pulled by a frictional force between the end surface 21a of the sliding section 21 and the cavity wall 4a of the sliding cavity 4 in a direction opposite to the direction in which the piston 5 moves forward, thus the packing unit 8 is slightly bent to a state where the portion including the sliding section 21 is inclined backward, and the packing unit 8 in that attitude moves forward together with the piston 5. At that time, because of the bending of the packing unit 8, the contact pressure of the end surface 21a of the sliding section 21 to the cavity wall 4a of the sliding cavity reduces, and the amount of distortion of the packing unit 8 also reduces. Thus, the sliding resistance reduces, and the piston 5 can smoothly start moving forward.

When the piston 5 reaches the forward end and stops at that position, the packing unit 8 is pressurized by the air pressure, and the second side surface 22b is pressed against one of the side walls 16a of the mounting groove 16 as in the case illustrated in Fig. 6.

The operation of the packing unit 8 when in the state where the piston 5 is at the forward end, the compressed air is supplied to the rod-side pressure space 12 to reverse the piston 5 is the same as the case where Figs. 6 and 7 are flipped horizontally. In that case, because both of the side surfaces 22a and 22b of the packing unit 8 have the recessed grooves 27 extending in the radius direction and the recessed grooves 27 function as vent gaps, the side surfaces 22a and 22b of the packing unit 8 can be prevented from being in close contact with the side wall 16a of the mounting groove 16.

As previously described, the first side surface 22a and the second side surface 22b in the packing unit 8 are conical surfaces inclined in mutually opposite directions, the thickness increases in a gradual manner in the direction from the mounting section 20 toward the sliding section 21, the width W in the radius direction is three to five times the thickness T2 in the sliding section 21, and the packing unit 8 is elongated in the radius direction. Therefore, the packing unit 8 can be easily bent in a smooth and uniform manner as a whole during operation, and in addition, because the plurality of constricted sections 26a, 26b, and 26c corresponding to the plurality of annular grooves 25a, 25b, and 25c are evenly spaced in the intermediate portion of the packing unit 8, the bending can be further facilitated. By virtue of that bending, the sliding resistance during operation can be efficiently reduced, and biting occurring with compression during pressurization by the compressed air is unlikely to occur.

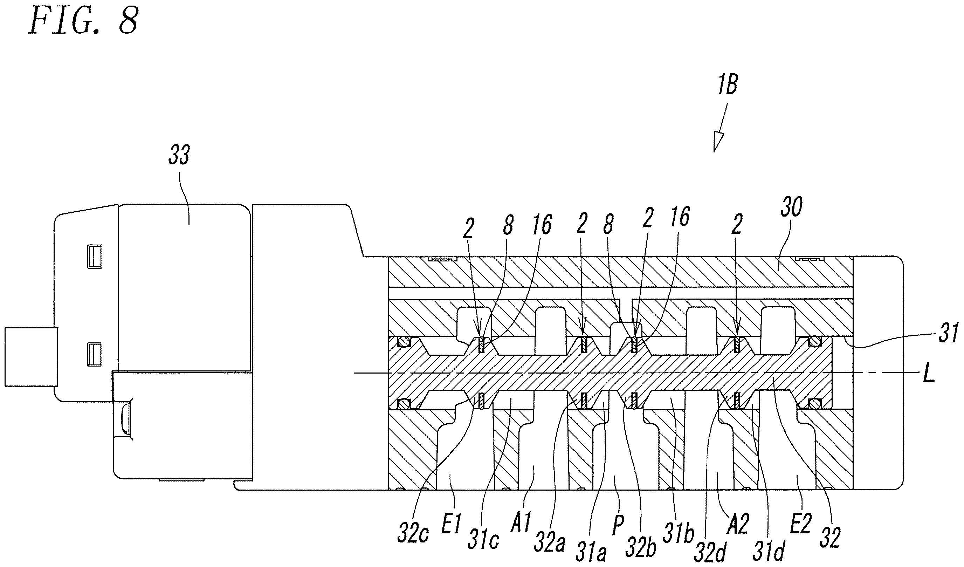

In the above-described embodiment, the air cylinder 1A is illustrated as the fluid pressure device. The fluid pressure device may be a spool valve. Fig. 8 illustrates a spool valve 1B including the seal structure 2 according to the present invention. In the spool valve 1B, a valve housing 30 has a valve cavity 31, the valve cavity 31 (sliding cavity) houses a spool 32 such that the spool 32 can freely slide, and the spool 32 is configured to be driven by an electromagnetic pilot valve 33. The spool 32 is equipped with the mounting grooves 16 and the packing units 8. Accordingly, in the seal structures 2 in the spool valve 1B, the spool 32 is the first member, and the valve housing 30 is the second member.

The configuration of the spool valve 1B is described in further detail.

The valve housing 30 includes a single supply port P, a first output port A1 and a second output port A2 on opposite sides of the supply port P, and a first exhaust port E1 and a second exhaust port E2 positioned outside the first output port A1 and the second output port A2. All of the ports communicate with the valve cavity 31.

The spool 32 includes a first land section 32a capable of riding on a first valve cavity portion 31a between the supply port P and the first output port A1 in the direction from the supply port P, a second land section 32b capable of riding on a second valve cavity portion 31b between the supply port P and the second output port A2 in the direction from the supply port P, a third land section 32c capable of riding on a third valve cavity portion 31c between the first output port A1 and the first exhaust port E1 in the direction from the first exhaust port E1, and a fourth land section 32d capable of riding on a fourth valve cavity portion 31d between the second output port A2 and the second exhaust port E2 in the direction from the second exhaust port E2. Each of all the land sections is equipped with the mounting groove 16 and the packing unit 8.

In the spool valve 1B, when the spool 32 reciprocates by being driven by the pilot valve 33, the packing units 8 mounted on the land sections 32a to 32d ride on the valve cavity portions 31a to 31d or exit from the valve cavity portions 31a to 31d, thereby switching the connection states of the paths between the ports.

When air pressure acts on the packing unit 8 riding on any of the valve cavity portions 31a to 31d in the same direction as the direction in which that packing unit 8 is moving, that packing unit 8 behaves like in the case illustrated in Fig. 7, and the sliding resistance is reduced.

In contrast, when the air pressure acts on the packing unit 8 riding on any of the valve cavity portions 31a to 31d in a direction opposite to the direction in which that packing unit 8 is moving, that packing unit 8 is pressed against the side wall 16a on the rear side in the direction of movement out of the left and right side walls 16a of the mounting groove 16, as illustrated in Fig. 6, that packing unit 8 in that state moves in the right direction in Fig. 6, and a portion of the sliding section 21 enters the gap G between the land sections 32a to 32d and the valve cavity portions 31a to 31d. In that situation, because the sliding section 21 has an increased diameter and is unlikely to be deformed, problems of malfunctions or the like resulting from the biting do not arise. Reference Signs List

- 1A: air cylinder
- 1B: spool valve
- 2: seal structure
- 3: cylinder housing (second member)
- 4: cylinder cavity
- 5: piston (first member)
- 8: packing unit
- 16: mounting groove
- 16b: bottom wall
- 20: mounting section
- 20a: end surface
- 21: sliding section
- 21a: end surface
- 22a: first side surface
- 22b: second side surface
- 25a, 25b, 25c: annular groove
- 27: recessed groove
- 30: valve housing (second member)
- 31: valve cavity
- 32: spool (first member)
- L: axis
- T1: thickness in mounting section
- T2: thickness in sliding section
- W: width
- θ: angle
- O1, O2, O3: center of curvature
- D1, D2, D3, D4: distance

## Claims

1. A seal structure for a fluid pressure device, the seal structure for sealing between a first member and a second member relatively displaced in the fluid pressure device, the seal structure comprising:
a ring-shaped mounting groove disposed in the first member; and a ring-shaped packing unit housed in the mounting groove,
wherein an inner circumferential portion of the packing unit is a mounting section in contact with a bottom wall of the mounting groove, and an outer circumferential portion of the packing unit is a sliding section in contact with the second member,
an end surface of the sliding section and an end surface of the mounting section are arc-shaped surfaces curved outward,
a first side surface and a second side surface of the packing unit on a first side and a second side, respectively, in a direction of an axis thereof are conical surfaces which are inclined such that their diameters gradually increase in a direction from the mounting section toward the sliding section and which are inclined in mutually opposite directions, and
a thickness of the packing unit in the axis direction increases in a gradual manner in the direction from the mounting section to the sliding section, the thickness in the mounting section is the smallest, and the thickness in the sliding section is the largest.

2. The seal structure according to Claim 1, wherein an angle of the first side surface to a plane perpendicular to the axis and an angle of the second side surface thereto are equal.

3. The seal structure according to Claim 1, wherein the thickness in the sliding section of the packing unit is 1.2 to 1.5 times the thickness in the mounting section, and a width of the packing unit in a radius direction thereof is three to five times the thickness in the sliding section.

4. The seal structure according to Claim 1, wherein the first side surface and the second side surface of the packing unit have a plurality of annular grooves for keeping a lubricant, the annular grooves are concentric about the axis, the plurality of annular grooves in the first side surface and the plurality of annular grooves in the second side surface are equal in number and are in mutually opposed positions.

5. The seal structure according to Claim 4, wherein a cross-sectional shape of each of the annular grooves is an arc and is a minor arc, the arcs of all the annular grooves have the same radius of curvature, and all the annular grooves have the same depth.

6. The seal structure according to Claim 5, wherein the plurality of annular grooves in each of the first side surface and the second side surface of the packing unit comprise three annular grooves evenly spaced, and a distance between centers of curvature of the neighboring annular grooves, a distance from the end surface of the mounting section to the center of curvature of the annular groove nearest the mounting section, and a distance from the end surface of the sliding section to the center of curvature of the annular groove nearest the sliding section are equal.

7. The seal structure according to Claim 4, wherein the first side surface and the second side surface of the packing unit have a plurality of recessed grooves extending along the radius direction of the packing unit, arranged at equiangular intervals around the axis, starting at the end surface of the sliding section, and ending at a location of the annular groove nearest the mounting section, and the plurality of recessed grooves in the first side surface and the plurality of recessed grooves in the second side surface are in locations displaced from each other by 1/2 pitch in a circumferential direction thereof.

8. The seal structure according to Claim 7, wherein the recessed grooves and the annular grooves have the same depth.

9. The seal structure according to Claim 1, wherein the fluid pressure device is a fluid pressure cylinder, the first member is a piston housed in a cylinder cavity such that the piston is freely slidable, and the second member is a cylinder housing having the cylinder cavity.

10. The seal structure according to Claim 1, wherein the fluid pressure device is a spool valve, the first member is a spool housed in a valve cavity such that the spool is freely slidable, and the second member is a valve housing having the valve cavity.
